# EUROPÄISCHE PATENTANMELDUNG

(11) **EP 1 216 878 A1**
(43) Veröffentlichungstag der Anmeldung: **26.06.2002**
(21) Anmeldenummer: 01127180.6
(22) Anmeldetag: 16.11.2001
(51) Int. Cl.: B60N 2/24, B60N 2/12, B61D 33/00

(54) **Fahrgastsitz für Personenbeförderungsfahrzeuge**

(30) Priorität: 22.12.2000 DE 10064574
(71) Anmelder: Vogel Industrie GmbH, 76228 Karlsruhe (DE)
(72) Erfinder: Ehemann, Ernst K. Dipl.-Ing., 76227 Karlsruhe (DE)
(74) Vertreter: Dimmerling, Heinz, Dipl.-Ing.

(57) **Zusammenfassung**

Ein Fahrgastsitz für Personenbeförderungsfahrzeuge, insbesondere für Busse oder Bahnen weist ein auf einem Untergestell 1 angeordnetes Sitzelement 2 auf. An dem Sitzelement 2 ist eine um einen Schwenkpunkt 3a schwenkbare Rückenlehne 3 angeordnet. Das Sitzelement 2 ist verschiebbar auf dem Untergestell 1 angeordnet, wobei das Sitzelement 2 mittels einer Zwangssteuerung derart mit der Rückenlehne 3 verbunden ist, daß bei einer Verschwenkung der Rückenlehne 3 nach hinten eine Verschiebung des Sitzelements 2 nach vorne erfolgt und bei einer Verschwenkung der Rückenlehne 3 nach vorne eine Verschiebung des Sitzelements 2 nach hinten erfolgt.

## Beschreibung

Die Erfindung betrifft einen Fahrgastsitz für Personenbeförderungsfahrzeuge, insbesondere für Busse oder Bahnen, mit einem auf einem Untergestell angeordneten Sitzelement und einer um einen Schwenkpunkt damit schwenkbar verbundenen Rückenlehne.

Ein derartiger Fahrgastsitz ist beispielsweise aus der EP 0 443 065 B1 sowie im Stand der Technik allgemein bekannt, da er regelmäßig in Reisebussen oder Bahnen Verwendung findet. Durch die Verschwenkung der Rückenlehne bietet der Fahrgastsitz einer darauf sitzenden Person einen relativ großen Komfort, da in der Regel eine nach hinten verschwenkte Rückenlehne einen gemütlichere Sitzstellung darstellt, als eine aufrecht gestellte Rückenlehne.

Nachteilig bei den bekannten Fahrgastsitzen ist jedoch, daß durch die Verschwenkung der Rückenlehne die Rückenlehne den rückwärtigen Raum hinter dem Sitz einengt. Dies wird von einer auf einem hinter dem betreffenden Fahrgastsitz sitzenden Person als unangenehm empfunden, da ihre Bewegungsfreiheit hierdurch eingeschränkt wird.

Es sind zwar aus dem Bereich der Deutschen Bundesbahn Fahrgastsitze bekannt, bei denen das Sitzelement verschiebbar auf einem Untergestell angeordnet ist, und bei denen die Rückenlehne an ihrem oberen Ende an einer Rückwand gleitverschieblich befestigt ist, so daß beim Verschieben des Sitzelements auf dem Untergestell die Rückenlehne an der Rückwand auf- beziehungsweise abgleitet, wodurch sich die Neigung der Rückenlehne verstellt. Jedoch erfordert ein derartiger Fahrgastsitz sehr viel Bauraum, so daß die Bewegungsfreiheit der Beine eingeschränkt ist.

Aus der DE 31 51 259 A1 ist des weiteren ein Fahrgastsitz bekannt, welcher ein Sitzteil aufweist, dessen Sitzrahmen in Schieberichtung einer Bodenführung gegeneinander verschiebbar geführte Rahmenteile umfaßt. Der erste Rahmenteil trägt die Sitzfläche während der zweite Rahmenteil verschiebbar und mittels einer Sitzarretierungseinrichtung fixierbar an der Bodenführung gehalten ist. An dem Sitzteil ist abklappbar ein Lehnenteil gehalten. Der Lehnenrahmen ist hierbei über ein erstes Gelenk an einem der beiden Rahmenteile schwenkbar gelagert. Der Lehnenrahmen trägt im Abstand von der Gelenkachse des ersten Gelenks ein zweites Gelenk, über das er direkt oder indirekt mit dem jeweils anderen Rahmenteil kraftschlüssig gekuppelt ist. Die Gelenkachse des mit dem ersten Rahmenteil verbundenen Gelenks ist oberhalb der Gelenkachse des mit dem zweiten Rahmenteil verbundenen Gelenks an dem Lehnenrahmen angeordnet. Beim Vorklappen des Lehnenteils wird zugleich der Sitzteil nach vorne geschoben, wodurch bei zweitürigen Kraftfahrzeugen die Einstiegsöffnung für die hinteren Sitze vergrößert wird.

Darüber hinaus ist aus der DE 28 12 322 A1 ein Fahrzeugsitz mit Sitzpolster und Lehne bekannt, bei welchen das Sitzpolster auf Schienen angeordnet ist, welche in Längsrichtung verschieblich an in Abstand von ihnen liegenden, mit dem Boden des Fahrzeugkörpers ortsfest verbundenen Schienen gestützt sind. Den ortsfesten Schienen sind senkrechte Wände mit im wesentlichen horizontalen Längsrichtung des Fahrzeugs liegenden Stützen zugeordnet. Zwischen den ortsfesten Schienen erstreckt sich eine den Sitz festlegende Achse mit ihren Enden durch die Schlitze, welche durch eine Verriegelung wahlweise an einer von mehreren vorgesehenen Stellen längs der Schlitze festlegbar ist. Hinter dieser Achse mit den ortsfesten Schienen ist eine querliegende Achse mit ihren Enden in die Schlitze der senkrechten Wände eingreifend schwenkbar angeordnet, welche mit Tragarmen für die Lehne verbunden ist. Zwischen den Tragarmen für die Lehne und dem Sitzpolster sind Verbindungsglieder so angeordnet, daß bei Vorwärtsschwenken der Lehne das Sitzpolster bis in eine von der jeweilig eingestellten Lage unabhängige Endlage nach vorne bewegt wird. Von den mit dem Sitzpolster verbundenen Schienen erstrecken sich vor der den Sitz festlegenden Achse Anschläge, die die weitere Rückwärtsbewegung des Sitzpolsters durch Rückschwenken der Lehne bei Erreichen der anfänglichen Lage des Sitzes unterbinden.

Es ist Aufgabe der Erfindung, einen eingangs genannten Fahrgastsitz derart auszubilden, daß er weniger Bauraum erfordert und die Rückenlehne bei einem Verschwenken allenfalls nur geringfügig in den rückwärtigen Raum eindringt.

Die Lösung dieser Aufgabe ergibt sich aus den Merkmalen des kennzeichnenden Teils des Anspruchs 1. Vorteilhafte Weiterbildungen der Erfindung ergeben sich aus den Unteransprüchen.

Gemäß der Erfindung ist ein Fahrgastsitz für Personenbeförderungsfahrzeuge, insbesondere für Busse oder Bahnen, mit einem auf einem Unterteil angeordneten Sitzelement und einer um einen Schwenkpunkt damit schwenkbar verbundenen Rükkenlehne dadurch gekennzeichnet, daß das Sitzelement verschiebbar auf dem Untergestell angeordnet ist, und das Sitzelement mittels einer Zwangssteuerung derart mit der Rückenlehne verbunden ist, daß bei einer Verschwenkung der Rückenlehne nach hinten eine Verschiebung des Sitzelements nach vorne erfolgt und bei einer Verschwenkung der Rückenlehne nach vorne eine Verschiebung des Sitzelements nach hinten erfolgt.

Dadurch, daß das Sitzelement verschiebbar auf dem Untergestell angeordnet ist, und das Sitzelement mittels einer Zwangssteuerung derart mit der Rückenlehne verbunden ist, daß bei einer Verschwenkung der Rückenlehne nach hinten eine Verschiebung des Sitzelements nach vorne erfolgt und bei einer Verschwenkung der Rückenlehne nach vorne eine Verschiebung des Sitzelement nach hinten erfolgt, kann das Sitzelement bei einem Verschwenken der Rückenlehne in die jeweils entgegengesetzte Richtung verschoben werden. Wird die Rückenlehne beispielsweise nach hinten verschwenkt, wird das Sitzelement nach vorne verschoben. Durch die Verschwenkung der Rückenlehne nach hinten kann diese zwar in den rückwärtigen Raum eindringen, jedoch wird das Eindringen im wesentlichen durch die Verschiebung des Sitzelements nach vorne kompensiert, da die Rückenlehne am Sitzelement angelenkt ist und somit mit dem Sitzelement nach vorne verschoben wird. Derselbe Effekt wird erreicht, wenn statt die Rückenlehne zu verschwenken das Sitzelement verschoben wird. Das heißt die äußere Kraft kann entweder an der Rückenlehne angreifen oder am Sitzelement.

Durch eine entsprechende Ausgestaltung der Zwangssteuerung lassen sich beliebige Übersetzungsverhältnisse einstellen. So könnte ein solches Übersetzungsverhältnis gewählt werden, daß das Sitzelement beispielsweise so weit nach vorne verschoben wird, daß die Rückenlehne auch nicht geringfügig in den rückwärtigen Raum eindringt.

Als zwangsgesteuertes Antriebselement kann beispielsweise ein elektromotorischer Antrieb in Frage kommen. Die Neigung der Rückenlehne beziehungsweise gegebenenfalls die Verschiebung des Sitzelements muß dann mittels eines Sensors erfaßt werden, wobei das Ausgangssignal des Sensors zur Steuerung des Antriebselements verwendet wird. Statt mittels einer elektromotorischen Ausbildung des Antriebselements könnte das Antriebselement auch aus entsprechenden hydraulischen oder pneumatischen Komponenten aufgebaut sein. Besonders vorteilhaft ist es jedoch eine rein mechanische Zwangssteuerung des Sitzelements, da dies einen kostengünstige und robuste Lösung ist.

Bei einer rein mechanischen Zwangssteuerung hat sich als besonders vorteilhaft eine Ausführungsform herausgestellt, bei der das Antriebselement ein Hebel ist, welcher einerseits am Untergestell mittels eines ersten Gelenks und andererseits unterhalb des Schwenkpunkts der Rückenlehne mittels eines zweiten Gelenks an der Rückenlehne befestigt ist.

Dadurch, daß der Hebel mit einem Ende unterhalb des Schwenkpunkts der Rückenlehne an der Rückenlehne befestigt ist, wird dieses Ende des Hebels beim Verschwenken der Rückenlehne in die jeweils entgegengesetzte Richtung bewegt. Da das andere Ende des Hebels am Untergestell befestigt ist, erfolgt beim Verschwenken des Hebels zwangsweise eine Verschiebung des Sitzelements in Richtung der Schwenkbewegung des Hebels, das heißt entgegen der Richtung der Schwenkbewegung der Rückenlehne. Damit die Schwenkbewegung des Hebels in eine Linearbewegung umgesetzt werden kann, ist es erforderlich, daß der Hebel in der Weise an der Rückenlehne angelenkt ist, daß sich der Anlenkpunkt in Längsrichtung des Hebels verschieben kann. Dies kann beispielsweise durch ein Langloch im Hebel realisiert werden. Die Befestigung des Hebels am Untergestell erfolgt in der Weise, daß der Hebel um den Befestigungspunkt drehbar ist, jedoch nicht längs verschieblich.

Als besonders vorteilhaft hat sich eine Ausführungsform der Erfindung herausgestellt, bei der der Hebel mittels eines dritten Gelenks an dem Sitzelement befestigt ist. Durch das dritte Gelenk läßt sich die durch eine Verschwenkung der Rückenlehne hervorgerufene Verschwenkung des Hebels in besonders zuverlässiger Weise in eine Linearbewegung des Sitzteils umsetzen. Während das dritte Gelenk so ausgebildet ist, daß es lediglich eine Drehbewegung gestattet, sind das erste und das zweite Gelenk derart ausgebildet, daß sie neben einer Drehbewegung auch noch eine Verschiebung der Gelenkpunkte in Längsrichtung des Hebels gestatten. Besonders einfach läßt sich dies durch Langlöcher realisieren, in denen Gelenkpunkte längs verschieblich angeordnet sind.

Als besonders vorteilhaft hat sich eine Ausführungsform der Erfindung herausgestellt, bei der die Rückenlehne einen sogenannten Unterflurhebel aufweist, an dem das zweite Gelenk angeordnet ist. Eine derartige Ausführungsform ist deshalb besonders vorteilhaft, weil hierbei auf einen handelsüblichen Fahrgastsitz zurückgegriffen werden kann. Denn Fahrgastsitze weisen üblicherweise Unterflurhebel auf, an denen eine Gasdruckfeder befestigt ist, mittels welcher die Verstellung der Rückenlehne vorgenommen werden kann.

Bei einer weiteren besonderen Ausführungsform der Erfindung ist der Hebel mit einem Ende nicht unterhalb des Schwenkpunkts der Rückenlehne an der Rückenlehne befestigt, sondern oberhalb des Schwenkpunkts der Rückenlehne. Hierdurch wird auf einfache und preiswerte Weise die Zwangssteuerung zwischen der Rückenlehne und dem Sitzelement erreicht.

Ist das Sitzelement auf einem Verstellmodul angeordnet, welches gegeneinander verschiebbare Elemente aufweist, lassen sich handelsübliche Fahrgastsitze in erfindungsgemäßer Weise modifizieren. Hierzu ist es lediglich erforderlich, daß das untere verschiebbare Element auf dem Untergestell angeordnet wird und auf das obere verschiebbare Element das Sitzelement angeordnet wird. Durch Befestigung des Hebels einerseits an einem Unterflurhebel und andererseits am Untergestell erhält man einen erfindungsgemäßen Fahrgastsitz. Der Hebel kann auch mittels eines dritten Gelenks mit dem oberen verschiebbaren Element verbunden werden, so daß eine zuverlässige Verschiebung des Sitzelements durch eine Verschwenkung der Rückenlehne gewährleistet ist.

Weitere Merkmale und Einzelheiten der vorliegenden Erfindung ergeben sich aus der nachfolgenden Beschreibung eines besonderen Ausführungsbeispiels unter Bezugnahme auf die Zeichnung.

Es zeigt
- Figur 1: eine schematische Anordnung einer ersten Ausführungsform eines erfindungsgemäß ausgebildeten Fahrgastsitzes mit nicht verschwenkter Rükkenlehne,
- Figur 2: den in Figur 1 dargestellten Fahrgastsitz mit verschwenkter Rückenlehne,
- Figur 3: eine schematische Anordnung einer zweiten erfindungsgemäßen Ausführungsform eines erfindungsgemäßen Fahrgastsitzes, mit nicht verschwenkter Rückenlehne,
- Figur 4: den in Figur 3 dargestellten Fahrgastsitz mit verschwenkter Rückenlehne,
- Figur 5: eine schematischen Anordnung einer dritten Ausführungsform des erfindungsgemäßen Fahrgastsitzes, mit nicht verschwenkter Rückenlehne,
- Figur 6: den in Figur 5 dargestellten Fahrgastsitz mit verschwenkter Rückenlehne, und
- Figur 7: eine schematischen Anordnung einer vierten Ausführungsform des erfindungsgemäßen Fahrgastsitzes.

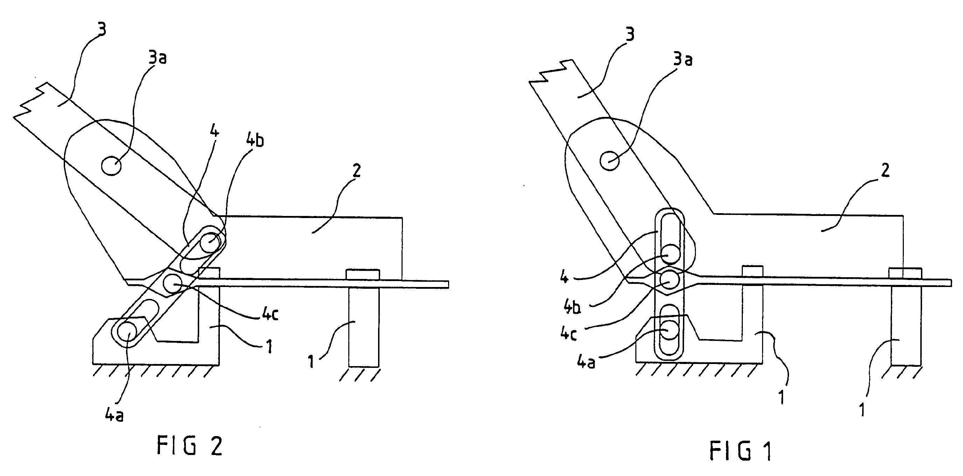

Wie den Figuren 1 und 2 entnommen werden kann, ist auf einem Untergestell 1 ein Sitzelement 2 längs verschieblich angeordnet. Eine Rückenlehne 3 ist um einen Schwenkpunkt 3a schwenkbar mit dem Sitzelement 2 verbunden.

Das Untergestell 1 weist einen ersten Gelenkpunkt 4a auf, mittels welchem ein Hebel 4 schwenkbar mit dem Untergestell 1 verbunden ist. Der erste Gelenkpunkt 4a ist in einem Langloch des Hebels 4 angeordnet, so daß der Hebel 4 neben einer Schwenkbewegung auch noch eine Linearbewegung in Längsrichtung des Hebels 4 durchführen kann.

Unterhalb des Schwenkpunkts 3a der Rückenlehne 3 ist ein zweiter Gelenkpunkt 4b vorhanden, mittels welchem der Hebel 4 schwenkbar mit der Rückenlehne 3 verbunden ist. Der zweite Gelenkpunkt 4b ist in einem Langloch des Hebels 4 angeordnet, so daß der Gelenkpunkt 4b neben einer Drehbewegung auch noch eine Linearbewegung in Längsrichtung des Hebels 4 durchführen kann.

Am Sitzelement 2 ist des weiteren ein dritter Gelenkpunkt 4c befestigt, welcher zwischen dem ersten Gelenkpunkt 4a und dem zweiten Gelenkpunkt 4b mit dem Hebel 4 verbunden ist. Um dem dritten Gelenkpunkt 4c kann der Hebel 4 lediglich eine Drehbewegung durchführen.

Wird die Rückenlehne 3 nach hinten verschwenkt, erfolgt durch die Hebelwirkung eine Verschwenkung des zweiten Gelenkpunktes 4b in entgegengesetzter Richtung. Die Bewegung des zweiten Gelenkpunktes 4b erfolgt auf einer Kreisbahn, deren Richtung in der Figur 1 entgegen dem Uhrzeigersinn ist. Durch die Bewegung des zweiten Gelenkpunktes 4b wird der obere Bereich des Hebels 4 nach vorne geschoben. Hierdurch führt der Hebel 4 eine Bewegung in Richtung des Uhrzeigersinns um den ersten Gelenkpunkt 4a durch.

Durch die Befestigung des Hebels 4 mittels dieses dritten Gelenkpunktes 4c am Sitzelement 2 wird das Sitzelement 2 entsprechend dem Weg des dritten Gelenkpunktes 4c nach vome verschoben.

Die Position der Elemente bei verschwenkter Rückenlehne 3 ist in Figur 2 dargestellt.

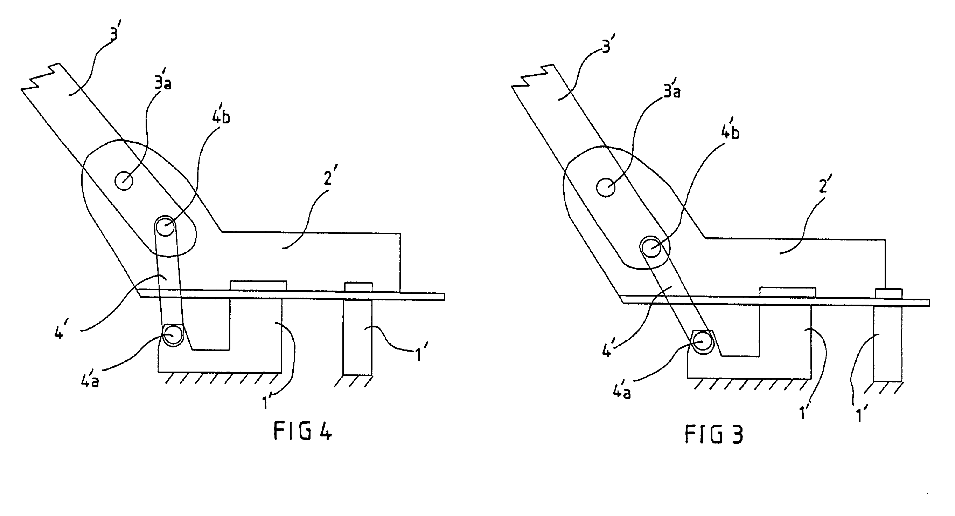

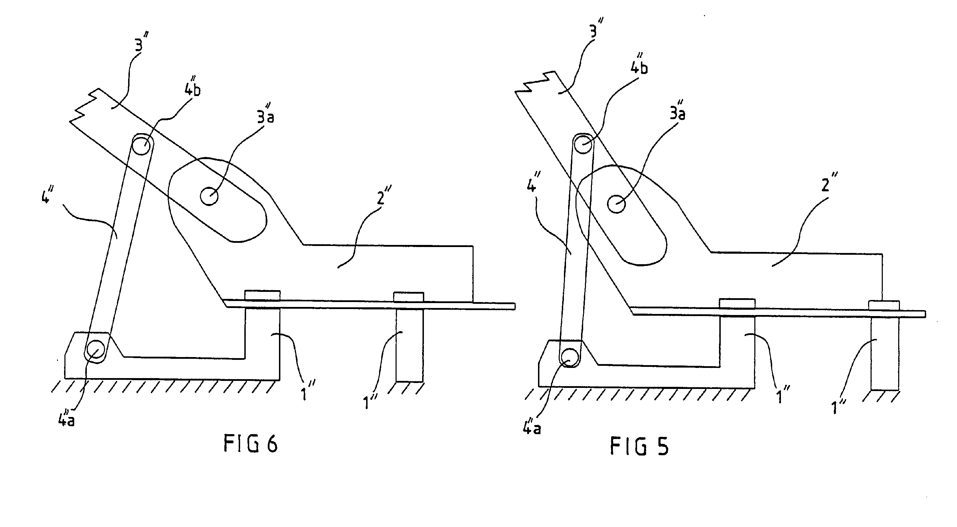

Wie den Figuren 3 und 4 entnommen werden kann, kann auf den dritten Gelenkpunkt am Sitzelement 2' verzichtet werden. Es ist hinreichend, daß der Hebel 4' mit einem Ende mittels eines ersten Gelenkpunktes 4a' mit dem Untergestell 1' und mittels eines zweiten Gelenkpunktes 4b' mit der Rückenlehne 3' unterhalb des Schwenkpunktes 3a' verbunden ist. Hierbei ist es zweckmäßig, daß der erste Gelenkpunkt 4a' nur schwenkbar und nicht längs verschieblich in dem Hebel 4' verbunden ist. Bei dieser Ausführungsform läßt sich die Rückenlehne 3' durch ein Verschieben des Sitzelements 2' auf einfache Weise verschwenken.

Die Position der Elemente bei verschwenkter Rückenlehne 3" ist in Figur 4 dargestellt.

Bei der in den Figuren 5 und 6 dargestellten Ausführungsform ist der Hebel 4" einerseits mittels eines ersten Gelenkpunktes 4a" schwenkbar mit dem Untergestell 1" verbunden und andererseits mittels eines zweiten Gelenkpunktes 4b" schwenkbar mit der Rückenlehne 3" oberhalb des Schwenkpunktes 3a" verbunden. Beide Gelenkpunkte 4a", 4b" sind in dem Hebel 4" lediglich schwenkbar, nicht jedoch längs verschieblich angeordnet. Hierdurch läßt sich das Sitzelement 2" durch eine Verschwenkung der Rückenlehne 3" verschieben.

Die Position der Elemente bei verschwenkter Rückenlehne 3"' ist in Figur 6 dargestellt.

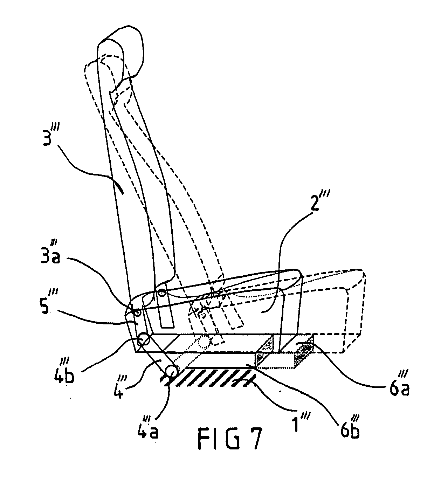

Wie Figur 7 entnommen werden kann, kann zwischen dem Sitzelement 2"' und dem Untergestell 1"' ein Verstellmodul angeordnet sein, welches gegeneinander verschiebbare Elemente 6a, 6b aufweist. Das untere Element 6b ist auf dem Untergestell 1''' fest angeordnet. Das obere Element 6a ist fest mit dem Sitzelement 2"' verbunden. Die Rückenlehne 3"' weist in herkömmlicher Weise einen Unterflurhebel 5"' auf. An seinem der Rückenlehne 3"' zugewandten Ende ist an dem Unterflurhebel 5"' der Schwenkpunkt 3a"' der Rückenlehne 3 ausgebildet. Der Hebel 4"' ist mittels eines ersten Gelenkpunktes 4a"' mit dem Untergestell 1"' sowie mittels eines zweiten Gelenkpunktes 4b"' mit dem der Rückenlehne 3"' abgewandten Ende des Unterflurhebels 5"' verbunden. Der erste Gelenkpunkt 4a''' und der zweite Gelenkpunkt 4b''' sind schwenkbar und längs verschieblich in dem Hebel 4"' angeordnet.

Zwischen dem ersten Gelenkpunkt 4a"' und dem zweiten Gelenkpunkt 4b"' ist ein dritter Gelenkpunkt 4c"' vorhanden, mittels welchem der Hebel 4"' schwenkbar mit dem oberen Element 6a des Verstellmoduls verbunden ist. Die Funktion dieser Ausführungsform entspricht im wesentlichen der in Figur 1 dargestellten Ausführungsform.

## Patentansprüche

1. Fahrgastsitz für Personenbeförderungsfahrzeuge, insbesondere für Busse oder Bahnen, mit einem auf einem Untergestell (1; 1'; 1") angeordneten Sitzelement (2; 2'; 2") und einer um einen Schwenkpunkt (3a; 3a'; 3a") damit schwenkbar verbundenen Rückenlehne (3; 3'; 3"), **dadurch gekennzeichnet,**
**daß** das Sitzelement (2; 2'; 2") verschiebbar auf dem Untergestell (1; 1'; 1") angeordnet ist, und das Sitzelement (2; 2'; 2") mittels einer Zwangssteuereinrichtung (4, 4a, 4b, 4c; 4', 4a', 4b'; 4", 4a", 4b"; 4"', 4a"', 4b"') derart mit der Rückenlehne (3; 3'; 3") verbunden ist, daß bei einer Verschwenkung der Rückenlehne (3; 3'; 3") nach hinten eine Verschiebung des Sitzelements (2; 2'; 2") nach vorne erfolgt und bei einer Verschwenkung der Rückenlehne (3; 3'; 3") nach vorne eine Verschiebung des Sitzelements (2; 2'; 2") nach hinten erfolgt.

2. Fahrgastsitz nach Anspruch 1,
**dadurch gekennzeichnet,**
**daß** die Zwangssteuereinrichtung (4, 4a, 4b, 4c; 4', 4a', 4b'; 4", 4a", 4b"; 4"', 4a"', 4b"') ein als Hebel (4; 4'; 4") ausgebildetes Antriebselement aufweist, welcher einerseits mittels eines ersten Gelenks (4a; 4a'; 4") am Untergestell (1; 1';1") und andererseits mittels eines zweiten Gelenks (4b; 4b'; 4b") an der Rückenlehne (3; 3'; 3") befestigt ist.

3. Fahrgastsitz nach Anspruch 2,
**dadurch gekennzeichnet,**
**daß** der Hebel (4, 4') unterhalb des Schwenkpunkts (3a; 3a') der Rückenlehne (3; 3') befestigt ist.

4. Fahrgastsitz nach Anspruch 3,
**dadurch gekennzeichnet,**
**daß** der Hebel (4) mittels eines dritten Gelenks (4c) an dem Sitzelement (2) befestigt ist.

5. Fahrgastsitz nach einem der Ansprüche 1 bis 4,
**dadurch gekennzeichnet,**
**daß** die Rückenlehne (3"') einen sogenannten Unterflurhebel (5"') aufweist, an dem das zweite Gelenk (4b"') angeordnet ist.

6. Fahrgastsitz nach Anspruch 1 oder 2,
**dadurch gekennzeichnet,**
**daß** der Hebel (4") oberhalb des Schwenkpunktes (3a") der Rückenlehne (3") befestigt ist.

7. Fahrgastsitz nach einem der Ansprüche 1 bis 6,
**dadurch gekennzeichnet,**
**daß** das Sitzelement (2) auf einem Verstellmodul angeordnet ist, welches gegeneinander verschiebbare Elemente (6a, 6b) aufweist.
